# EUROPÄISCHE PATENTSCHRIFT

(11) **EP 2 591 167 B1**
(45) Veröffentlichungstag und Bekanntmachung des Hinweises auf die Patenterteilung: **28.10.2015**
(21) Anmeldenummer: 12721731.3
(22) Anmeldetag: 05.04.2012
(51) Int. Cl.: E01B 35/00, B61K 9/08

(54) **ANORDNUNG ZUR VERMESSUNG VON GLEISABSCHNITTEN ZUM ZWECK DER INSTANDHALTUNG VON EISENBAHNSCHIENEN**
ARRANGEMENT FOR MEASURING TRACK SECTIONS FOR THE PURPOSE OF MAINTAINING RAILWAY TRACKS
ENSEMBLE PERMETTANT DE MESURER DES TRONÇONS DE VOIE À DES FINS D'ENTRETIEN DE RAILS DE VOIES FERRÉES

(30) Priorität: 10.04.2011 DE 102011017134; 23.11.2011 HK 11112683
(43) Veröffentlichungstag der Anmeldung: 15.05.2013
(73) Patentinhaber: Scherf, Wilfried, 07768 Hummelshain (DE); Luddeneit, Michael, 07768 Hummelshain (DE)
(72) Erfinder: Scherf, Wilfried, 07768 Hummelshain (DE); Luddeneit, Michael, 07768 Hummelshain (DE)
(74) Vertreter: Oehmke, Volker
(86) Internationale Anmeldenummer: PCT/DE2012/100091
(87) Internationale Veröffentlichungsnummer: WO 2012/139562

(56) Entgegenhaltungen:
- EP-A1- 1 548 400
- DE-A1- 3 441 092

## Beschreibung

Die Erfindung betrifft eine Anordnung zur Markierung und Vermessung von Gleisabschnitten zum Zweck der Instandhaltung von Eisenbahnschienen, insbesondere im Bereich von Weichen, Gleiswechseln, Kurven und anderen verschleißanfälligen Gleisabschnitten.

Im Stand der Technik werden Vermessungen von Gleisen zur Festlegung von Instandhaltungsbereichen auf vielfältige Weise durch optische, kapazitive, Wirbelstrommessungen vorgenommen. Dabei ist die automatisierte Vermessung mit Messzügen für verschleißkritischen Bereichen meist nicht ausreichend genau, um direkt die exakte Bearbeitung durch Arbeitsmaschinen (Schleif- oder Stopfmaschinen) zu steuern. Deshalb besteht das Bedürfnis, die exakte Vorortvermessung von Bearbeitungsbereichen bei der Gleisinstandsetzung nicht nur zuverlässig reproduzierbar, sondern möglichst auch fest gekoppelt mit der Arbeitsmaschine durchzuführen. Derzeit verwendete computergestützte Messapparate sind bisher-insbesondere für komplizierte Gleisbereiche, wie Kurven oder Weichen - nicht ausreichend genau bezüglich der Position eines Bearbeitungsbereiches reproduzierbar, wenn der Gleisbereich mehrfach mit einer Arbeitsmaschine überfahren wird und die Bearbeitung stets wieder genau an einer (im Voraus durch Schienenprofilmessgeräte) bestimmten Stelle einsetzen soll.

Eine Messeinrichtung, die es gestattet, in Gleisabschnitten, wie Kurvenbereichen, den Zustand von Eisenbahngleisen zu überprüfen, ist in DE 32 10 015 C2 beschrieben. Hierbei handelt es sich um ein handbedienbares Messgerät zum Messen von Eisenbahngleisen nach ihrer Seiten- und Höhenlage, das unter Benutzung von zwei Standsehnen, die in definiertem Abstand als ortsfest aufstellbare Stative mit Nivellierlibellen, Richtoptik und Messlatten ausgebildet sind und eine Standbasis mit Traverse zum Aufstellen auf beide Schienenstränge aufweist. Dieses Messgerät misst bei großen Abständen entlang einer Großsehne des Kurvenbogens die Gleislage und benötigt zur Verifikation der Messpositionen und der somit vorgefundenen Gleislage erfordert zusätzlich die Bezugnahme auf Fixpunkte (z.B. Oberleitungsmasten) die durch den Streckennetzbetreiber vorgegeben werden müssen. Eine freie, dem ermittelten Gleiszustand entsprechende Festlegung von Gleispositionen für eine Gleisinstandhaltung des Schienenstrangs ist dadurch nicht möglich.

Ein weiteres Messgerät zum Inspizieren von Schienen, insbesondere von Weichen, ist aus der EP 1 548 400 A1 bekannt. Hierbei wird mit einem Laserentfernungsmesser und einem Lichtwellenleiter, der den Laserstrahl auf den zu messenden Punkt projiziert, sowie einem CCD-Empfänger an der zu messenden Stelle der Schienenabstand detektiert.

Abgesehen davon, dass vorgenannte Messgerät optische Sensoren nutzt und bereits aus diesem Grund nicht für den Einsatz in Arbeitsmaschinen, wie Schleifmaschinen, geeignet ist, offenbart die EP 1 548 400 A1 über die Feststellung und Wiedererkennung der einzelnen Messpunkte (die im Abstand von 2-5 mm liegen können), dass diese über die von den Laufrädern des Messgerätes auf einen Drehwinkelgeber übertragenen zurückgelegte Wegstrecke registriert und den Messergebnissen der Messpunkte zugeordnet werden. Diese Messpositionsbestimmung ist aufgrund von Schlupf insbesondere Hin- und Herbewegungen im Kurvenbereich nicht genau reproduzierbar, sodass die Zuordnung für die Steuerung der Einsatzorte einer Arbeitsmaschine unzureichend ist. Die Drehwinkelgeber enthalten zudem systematische Fehler, die bei jeder Vor- und Rückwärtsfahrt im Arbeitsbereich durch Radschlupf eine Fehlersummierung verursachen.

Soll eine berührungslose Positionserfassung realisiert werden, ist eine visuelle Erkennbarkeit zwar wünschenswert, aber Verschmutzungen durch die Arbeitsmaschinen beeinträchtigen die Positionserkennung der Messpunkte, sodass visuelle Verfahren nicht im direkten Zusammenwirken mit Arbeitsmaschinen (z.B. Schienenschleifmaschinen) einsetzbar sind. Eine Messeinrichtung zum Auffinden von Messorten, die durch zuvor von Schienenprofilmessgeräten als Mängelabschnitte der Schienen festgestellt wurden oder durch Vorschriften zum Messen oder Bearbeiten definiert werden, muss demzufolge so ausgelegt werden, dass sie in der Lage ist, zuverlässig und reproduzierbar Positionsangaben, die nicht durch Umgebungsbedingungen verfälscht werden können, entlang des Schienenstrangs aufzunehmen

Der Erfindung liegt deshalb die Aufgabe zugrunde, eine neue Möglichkeit zur Markierung und Vermessung von Gleisabschnitten zum Zweck der Instandhaltung von Eisenbahnschienen zu finden, die eine zuverlässige und positionsgenaue Bestimmung von verschleißanfälligen Gleisabschnitten, wie z. B. Kurven und Weichen, auch in direktem Zusammenwirken mit Arbeitsmaschinen gestattet, ohne dass dafür eine Abschaltung der Schienenbearbeitung für die Messung oder eine anderweitige Entkopplung von Bearbeitung und Messung erforderlich ist.

Erfindungsgemäß wird die Aufgabe bei einer Anordnung zur Markierung und Vermessung von Gleisabschnitten zum Zweck der Instandhaltung von Eisenbahnschienen, bei der Mittel zur optischen Erfassung von Messpunkten vorhanden sind, durch die Merkmale vom Anspruch 1 gelöst.

Vorteilhaft ist die Sensoreinheit zur Schiene transversal vertikal schwenkbar ausgebildet.

Sie kann außerdem zweckmäßig transversal zur Schiene verschiebbar angebracht sein, um sie an Schienenspurbreite und Ausrichtung der Messpunkte zur Schiene anzupassen.

Vorteilhaft ist für jede Schiene eine Sensoreinheit am gleisverfahrbaren Gerät vorhanden, wobei die Sensoreinheiten in Transversalrichtung zum Gleis gegenüberliegend angeordnet sind.

Die Messpunkte werden an der Schiene zweckmäßig mittels eines Dauermagneten lösbar befestigt und bevorzugt am Steg der Schiene außen oder innen angebracht.

Dabei besteht die Möglichkeit, dass die Messpunkte bei einer Rillenschiene an der Leitschiene oder an der Führungsschiene eines Gleises angebracht sind.

Vorzugsweise sind die Messpunkte mit einer Lumineszenzschicht als schmalbandig emittierender Beschichtung versehen. Bei dieser Variante enthält die Sensoreinheit vorteilhaft einen spektral-selektiven Sensor für Lumineszenzlicht, der an die Emissionswellenlängenbereich der Lumineszenzschicht angepasst ist.

Als Zweites sind die Messpunkte zweckmäßig mit einem Identifikationskennungsträger in Form eines RFID-Chips versehen. Für diese Gestaltung enthält die Sensoreinheit zweckmäßig einen Funkwellen-Transducer zur Auslesung des RFID-Chips.

Das gleisverfahrbare Gerät zur Befestigung der Sensoreinheit ist vorteilhaft eine Arbeitsmaschine aus der Gruppe der Schienenschleifmaschinen oder Schienenstopfmaschinen. Es kann aber auch ein reines Messfahrzeug sein

Die Erfindung basiert auf der Grundüberlegung, dass die bekannten Schienenmessgeräte die ermittelten Mängelbereiche entweder außerhalb und unabhängig vom Schienenstrang über Fixpunkte (z.B. Masten) definieren oder aber am Gleis eine optische Erfassung von filigranen Messmarken (z.B. Barcodes o. Ä.) erfordern bzw. über radgetriebene Drehwinkelgeber indirekt die Position bestimmen. In beiden letztgenannten Fällen beeinträchtigen die herkömmlichen Verschmutzungen durch die Schienenbearbeitung (z. B. Schleifen) die optische oder mechanische Positionsmessung, die aber für die genaue Messwertaufnahme unverzichtbar ist. Dieses Problem bei der Erfindung durch den Einsatz geeigneter Markierungselemente (nachfolgend verkürzt "Messpunkte") gelöst, die vorübergehend oder auch dauerhaft an oder in der Nähe der Eisenbahnschienen positioniert werden und deren Eigenschaften so beschaffen sind, dass sie sowohl aktiv als auch passiv berührungslos durch ein direkt an einem Schienenfahrzeug befestigtes Messsystem erkennbar und mit ausreichender Genauigkeit erfassbar sind.

Die Erfindung besteht aus der Kombination von speziell gefertigten Messpunkten und einer dazugehörigen mehrfach sensitiven Sensoreinheit.

Das gesamte Messsystem für einen zu bearbeitenden Gleisabschnitt weist eine Mehrzahl von "beweglichen" Messpunkten auf, wobei die Befestigung vorzugsweise lösbar mittels eines Dauermagneten direkt an einer Seitenfläche des Schienenstegs erfolgt. Um die Messpunkte auch im geschlossenen Gleisbau (eingedecktes Gleis im Straßenbau) verwenden zu können, sind diese so gestaltet, dass sie auch an der Leitschiene (check rail) problemlos befestigt werden können.

Die Positionen der Messpunkte werden dabei anhand der Messprotokolle einer zuvor im Gleisabschnitt eingesetzten Schienenprofilmesseinrichtung oder entsprechend einer angebrachten Vorschrift zum Messen oder Bearbeiten festgelegt und die Messpunkte an den Orten angebracht, die z. B. für eine Arbeitsmaschine (Schleif- oder Stopfmaschine) den Einsatzpunkt und den Endpunkt eines oder mehrerer Bearbeitungsbereiche kennzeichnen.

Die Messpunkte sind erfindungsgemäß mittels einer Sensoreinheit auf Basis mindestens zweier qualitativ unterschiedlicher Messprinzipien erkennbar (detektierbar), wobei die Sensoreinheit an einem auf dem Gleis beweglichen Gerät mitgeführt wird. Eine zusätzliche Kopplung mit bzw. Übertragung an ein GPS ist mit einfachen Ergänzungen möglich.

Zur Detektion werden vorzugsweise zwei berührungslose Messverfahren gemeinsam eingesetzt, von denen eines ein möglichst wenig störanfälliges optisches Prinzip unter Verwendung von spektralselektiven Markerfarbstoffen (auf Basis von Photolumineszenz) nutzt und das andere ein Funkwellen-, magnetisches oder kapazitives Messprinzip mit Kodiermöglichkeit (ID-Kennzeichnung) verwendet. Beide Prinzipien können sowohl aktiv als auch passiv betrieben werden, es wird aber bevorzugt wenigstens ein aktives Prinzip zweckmäßig für die ID-Kennung benutzt.

Beim optischen Prinzip erfolgt bevorzugt die Detektion eines fluoreszierenden Farbstoffs, der durch Tageslicht oder durch die Arbeitsbeleuchtung einer Arbeitsmaschine ausreichend aktiviert wird, mittels eines spektral-selektiven optischen Sensors, der auf die Emissionswellenlängen des fluoreszierenden Farbstoffs eingestellt ist, realisiert. Damit ist die Positionserkennung gewährleistet und Verwechslungen bzw. Doppeldeutigkeiten von anderen reflektierenden Gegenständen werden ausgeschlossen.

Vorzugsweise ist der Messpunkt mit einem RFID-Chip (radio-frequency identification chip) ausgestattet. Dieser dient zur Identifizierung des optisch erfassten Messpunktes und stellt das "Zählwerk" oder die Klassifizierung der Bearbeitungsbereiche (die auch "Nicht-Bearbeitungsbereiche" sein können) des instand zu setzenden Gleisabschnitts dar.

Mit der Erfindung als Kombination von zwei unterschiedlichen Messverfahren angewendet auf geeignet gestaltete Messpunkte (Markierungselemente) ist es möglich, eine Markierung und Vermessung von Gleisabschnitten zum Zweck der Instandhaltung von Eisenbahnschienen zu realisieren, die eine zuverlässige und positionsgenaue Bestimmung von verschleißanfälligen Gleisabschnitten auch in direktem Zusammenwirken mit Arbeitsmaschinen gestattet, ohne dass dafür eine Abschaltung der Schienenbearbeitung für die Messung oder eine anderweitige Entkopplung von Bearbeitung und Messung erforderlich ist. Aus dem erfindungsgemäßen Sensorsystem resultieren eine eindeutige Bestimmung der Lage aller Messpunkte, deren richtige Reihenfolge, der Ausschluss von Doppeldeutigkeiten und eine reproduzierbare Wiederholgenauigkeit bei mehreren Überfahrten (Ausschluss des Radschlupfes).

Die Erfindung soll nachstehend anhand von Ausführungsbeispielen näher erläutert werden. Die Zeichnungen zeigen:
- Fig. 1:: schematische Darstellung eines Messpunktes an einer Vignol-Schiene;
- Fig. 2:: Anordnung der Messpunkte im Bereich einer Weiche (bei Gleiswechsel);
- Fig. 3:: Anordnung der Messpunkte im Bereich einer Weiche (kein Gleiswechsel);
- Fig. 4:: Seitenansicht einer Arbeitsmaschine mit Befestigung der Sensoreinheit hinten
- Fig. 5:: Vorderansicht einer Arbeitsmaschine mit schwenkbarer Sensoreinheit
- Fig. 6;: Vorderansicht einer Arbeitsmaschine mit verschiebbarer Sensoreinheit, Befestigung außen (Vignol-Schiene);
- Fig. 7:: Vorderansicht einer Arbeitsmaschine mit verschiebbarer Sensoreinheit, Befestigung innen (Rillenschiene);
- Fig. 8:: Vorderansicht einer Arbeitsmaschine mit verschiebbarer Sensoreinheit, Befestigung innen (auf der Rillenschiene);
- Fig. 9:: schematische Darstellung eines Messpunktes bei einer Rillen-Schiene im eingedeckten Bereich mit einem Magneten, der als kurzer Schenkel des Winkelelements zur Befestigung des Messpunktes ausgeführt ist;
- Fig. 10:: Darstellung der Wirkungsweise der Messpunktdetektion für die direkte Steuerung der Arbeitsmaschine anhand der erfassten Messpunkte;
- Fig. 11:: Darstellung der Wirkungsweise der Messpunktdetektion für die Datenerfassung und -verarbeitung von Arbeitsmaschinen unter Nutzung des GPS.

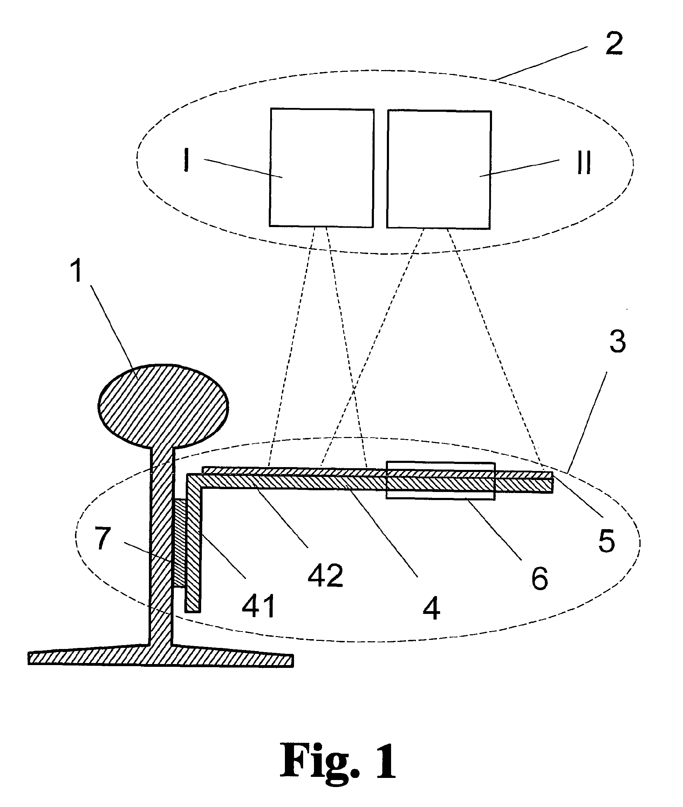

Die erfindungsgemäße Anordnung besteht in ihrem Grundaufbau - wie in Fig. 1 schematisch dargestellt - aus einem an einer Schiene 1 (hier stilisiert als Vignol-Schiene gezeichnet) lösbar angebrachten Messpunktes 3 über den eine Sensoreinheit 2, die an einer Arbeitsmaschine 8 befestigt ist, hinweggeführt wird. Die Sensoreinheit 2 besteht aus zwei unabhängigen Detektoreinheiten, die auf unterschiedlichen Prinzipien basieren.

Die erste Detektoreinheit ist ein optischer Sensor I, der spektral-selektiv Strahlung in einem begrenzten Empfangsbereich (mit beispielsweise 2 cm Durchmesser bei einem Abstand von bis zu 25 cm) aufnehmen kann und auf eine spektral schmalbandig vom Messpunkt 3 emittierte Strahlung eingestellt ist.

Die zweite Detektoreinheit ist auf eine definierte ID-Kennung ausgelegt und vorzugsweise ein aktiver Funkwellen-Transducer II, der die programmierte Kennung eines RFID-Chip 6 auslesen kann. Seine Reichweite ist auf ca. 10 bis 30 cm ausgelegt und beschränkt sich auf einen etwa genauso dimensionierten Sende- und Empfangskegel.

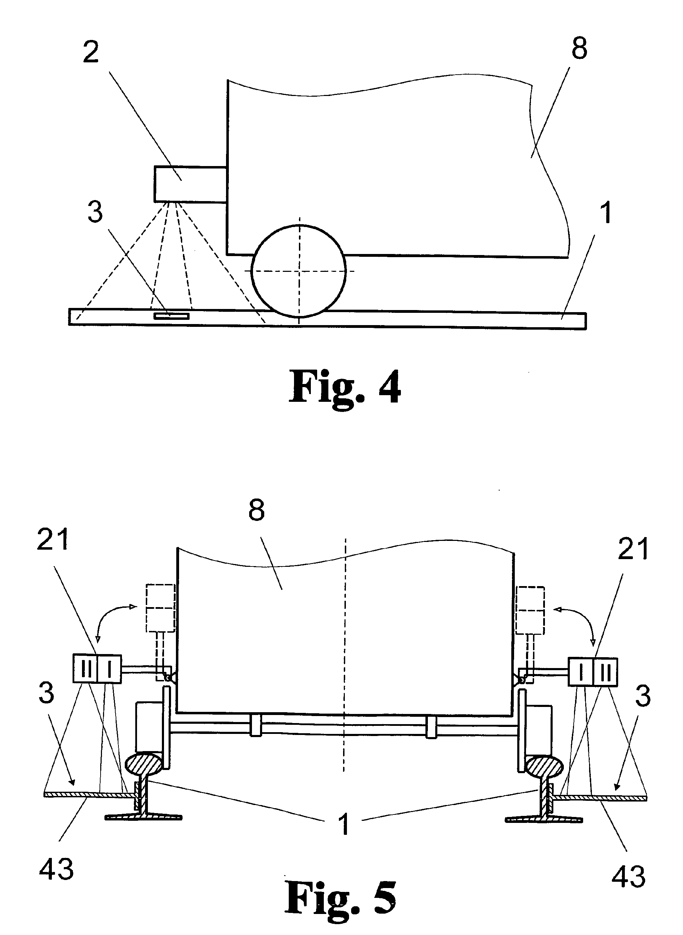

Der zu dieser Sensoreinheit 2 angepasste Messpunkt 3 besteht aus einem Winkelelement 4 (z.B. aus einem Metall, wie Stahl, Edelstahl, Messing o. Ä., einem stabilen Kunststoff oder Verbundwerkstoff, wie CFK, GFK, AFK oder SFK, oder anderen strapazierfähigen und formstabilen Materialien). Das Winkelelement 4 hat mindestens zwei Schenkel, von denen an einem kurzen Schenkel 41 ein Dauermagnet 7 befestigt oder eingelassen ist und an einem langen Schenkel 42 eine Lumineszenzschicht 5 (vorzugsweise aus fluoreszierendem oder phosphorisierendem Material) an der Oberseite aufgebracht ist, wobei die Außenseite des langen Schenkels 42 nach oben in Richtung der Sensoreinheit 2 gerichtet ist. Ferner ist am langen Schenkel 42 des Winkelelements 4 der die ID-Kennung enthaltende RFID-Chip 6 angebracht, der durch den Funkwellen-Transducer II auslesbar ist. In speziellen Ausführungen können am langen Schenkel 42 auch beidseitig kurze Schenkel 41 abgespreizt sein, sodass sich ein T-förmiges Winkelelement 43 (wie in Fig. 5 gezeigt) ergibt.

Während der optische Sensor I vorzugsweise bei der Detektion eines fluoreszierenden Farbstoffs als Lumineszenzschicht 5, der durch Tageslicht oder durch die Arbeitsbeleuchtung der Arbeitsmaschine 8 ausreichend aktiviert wird, einen sehr schmalen Empfangsbereich (von ca. 6-8 cm) erfasst und damit eine ausreichende Positionserkennung gewährleistet, ist der Funkwellen-Transducer II für die Identifikation des Messpunktes 3 zuständig und somit ein Detektor im Sinne eines "Zählwerks" oder eines Klassifikators für die Interpretation des dem Messpunkt 3 folgenden Bearbeitungsbereichs für die Arbeitsmaschine 8. Dafür ist jeder Messpunkt 3 mit einem RFID-Chip 6 ausgestattet, in dem eine bestimmte ID-Kennung programmiert ist.

Die einfachste "Zählwerk"-Kodierung besteht in der abwechselnden Vergabe einer 0/L-Kodierungen der Messpunkte 3, wobei "0" die Einsatzposition und "L" die Endposition für die einzelnen Bearbeitungsbereiche der Arbeitsmaschine 8 kennzeichnen.

Falls der instand zu setzende Gleisabschnitt, in dem die Arbeitsmaschine 8 (wiederholt) vor- und rückwärts den Gleisabschnitt durchfährt und bearbeitet, eine Vielzahl von Bearbeitungsbereichen (und somit von Messpunkten 3) oder Bereiche mit unterschiedlichen Bearbeitungsschritten aufweist, können abweichende oder erweiterte digitale Kennungen zur Herstellung der eineindeutigen Zuordnung der Messpunkte 3 in den RFID-Chip 6 programmiert werden.

Der Messpunkt 3 wird vorzugsweise passiv und aktiv durch die mit der Arbeitsmaschine 8 über den Gleisabschnitt bewegten Sensoreinheit 2 detektiert. Bei der Detektion werden zwei berührungslose Messverfahren gemeinsam eingesetzt, um ein möglichst wenig störanfälliges optisches Prinzip unter Verwendung von spektral schmalbandig emittierender Beschichtung (Lumineszenzschicht 5) zur genauen Positionsbestimmung im Gleis zu kombinieren mit einem Funkwellen-Transducer II, der die eineindeutige Zweckbestimmung des Messpunktes 3 festlegt und zugleich ausschließt, dass ein vom optischen Sensor I erfasstes Fremdsignal fälschlich als Messpunkt 3 weiterbehandelt werden kann.

Alternativ können zur Detektion einer ID-Kennung auch magnetische oder kapazitive Messprinzipien verwendet werden.

Aus dem erfindungsgemäßen Sensorsystem resultieren somit eine eindeutige Bestimmung der Lage aller Messpunkte 3, deren richtige Reihenfolge sowie der Ausschluss von Doppeldeutigkeiten und eine reproduzierbare Wiederholgenauigkeit der Messpunkerfassung bei mehreren Überfahrten (Ausschluss von durch Radschlupf verursachten Fehlerpositionen).

Die Messpunkte 3 können für unterschiedliche Gleismarkierungen genutzt, nach Bedarf angeordnet und umgeordnet sowie beliebig oft wiederverwendet werden, sodass sie bei Um- bzw. Ausbauten (Reparaturarbeiten) auf den Baustellen oder zwischen selbigen mehrfach und stets eindeutig zuordenbar verwendet werden können.

Die fluoreszierende Beschichtung (Lumineszenzschicht 5) kann im Falle einer Oberflächenbeschädigung (Verunreinigung, mechanische Einflüsse) auf einfache Weise (z.B. mittels Fluoreszenzfarbspray) direkt vor Ort auf der Baustelle erneuert werden. Die Messpunkte 3 somit verschleißfest, soweit der RFID-Chip 6 nicht beschädigt wird, und die Signale der Messpunkte 3 sind reproduzierbar, solange die Messpunkte 3 nicht versehentlich entlang der Schiene 1 verschoben werden.

Die Messpunkte 3 werden vorzugsweise als Winkelemente 4 mit einer Breite von 2-8 cm (bevorzugt 4 cm) hergestellt und weisen Schenkellängen zwischen 2-6 cm (bevorzugt 3 cm) für den kurzen Schenkel 41 und 10-20 cm (bevorzugt 12-15 cm) für den langen Schenkel 42 auf. Dabei kann der kurze Schenkel 41 auch ganz oder teilweise durch den Dauermagneten 7 ersetzt sein oder vom langen Schenkel 42 zweigen zwei kurze Schenkel 41 zu beiden Seiten ab, sodass sich eine T-Form ergibt. Für die Ortsauflösung der Lage der Messpunkte 3 ist es - selbst bei einer mehrere Zentimeter betragenden Breite des Winkelelements 4 - kein Problem, eine Positioniergenauigkeit von 1 cm einzuhalten, weil diese durch Mitten- oder Kantendetektion in der erfassten optischen Abbildung des Messpunktes 3 einfach und genau ermittelt werden kann.

Da keine visuelle Erkennbarkeit (keine hochauflösende Punktdetektion) notwendig ist, beeinträchtigen normale Verschmutzungen die Positionserkennung der Messpunkte 3 durch den optischen Sensor I nicht. Um Bearbeitungsverschmutzungen (z.B. Schleifstaub) in Grenzen zu halten, können aber zusätzlich Luftströme vorzugsweise mittels Düsen (nicht gezeichnet) in der Messabstand zwischen Messpunkt 3 und Sensoreinheit 2 eingeleitet werden. Der Messabstand beträgt bei den vorgenannten Detektionseinheiten (optischer Sensor I und Funkwellen-Transducer II zwischen 10 cm und 30 cm, wobei ein Optimum bei ca. 15 cm liegt.

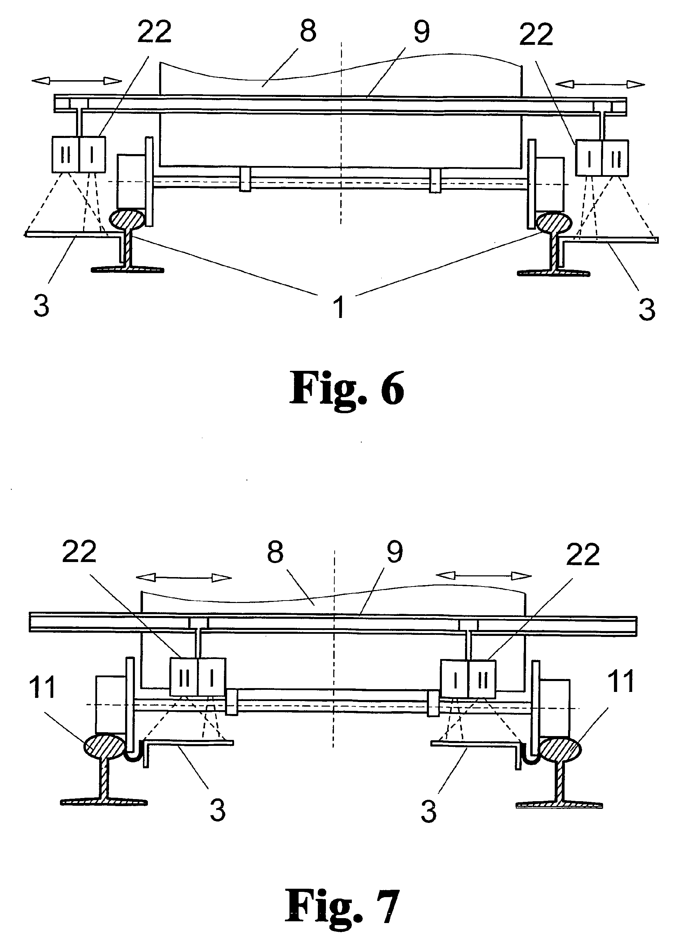

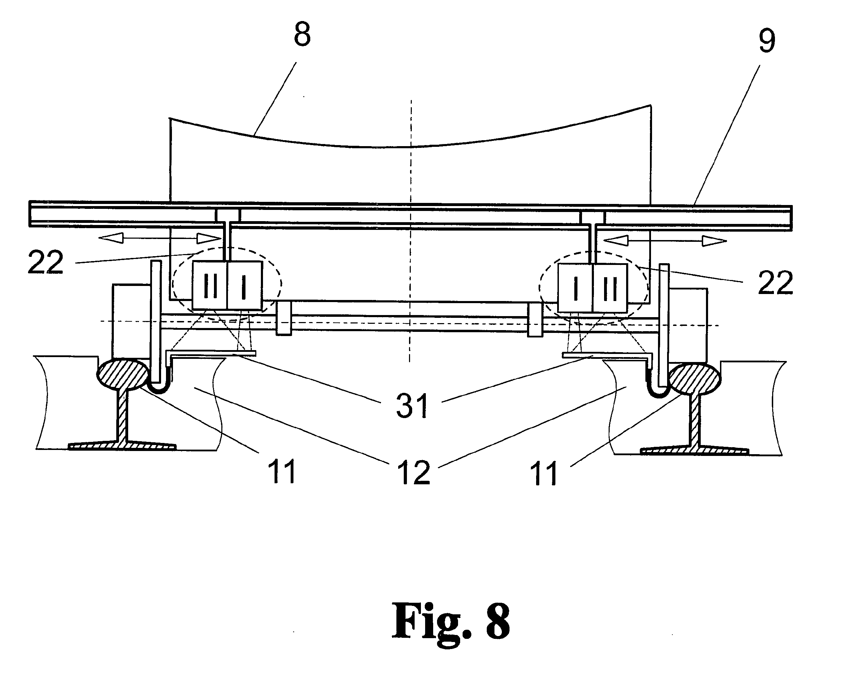

Das gesamte Messsystem für einen zu bearbeitenden Gleisabschnitt weist eine Mehrzahl von "beweglichen" Messpunkten 3 auf, die auf einfache Weise vorübergehend an oder in der Nähe der Eisenbahnschienen 1 befestigt werden, wobei die Befestigung zuverlässig mittels eines Dauermagneten 7 direkt an einer Seitenfläche der jeweiligen Schiene 1 erfolgt. Um die Messpunkte 3 auch im geschlossenen Gleisbau (eingedeckte Gleise) verwenden zu können, sind diese so gestaltet, dass sie auch an der Leitschiene (check rail) problemlos befestigt werden können. Die Befestigung wird vorzugsweise an der Gleisaußenseite vorgenommen, wie es in Fig. 5 und 6 gezeigt ist. Es gibt aber vielfältige besondere Gleisabschnitte, die eine Anbringung an der Gleisinnenseite oder auch an einer Leitschiene (check rail) oder einer Führungsschiene (guard rail) erfordern, wie in Fig. 7 und 8 gezeigt.

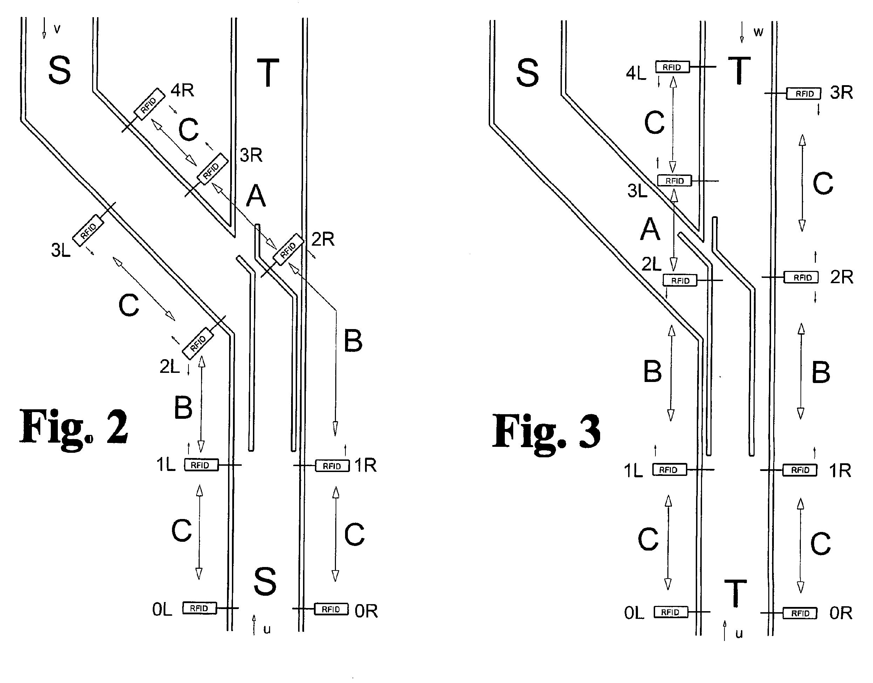

In Fig. 2 und 3 ist die Handhabung einer solchen vorhergehend beschriebenen Anordnung dargestellt, wobei aus Übersichtlichkeitsgründen nur die unterschiedlichen Messpunkte 3 im Gleisbereich einer Weiche eingezeichnet sind.

Vor der Gleisbearbeitung durch die Arbeitsmaschine 8 werden in bestimmten Gleisabschnitten auf Basis von zuvor ermittelten Schienenverschleißzuständen oder von vorgeschriebenen Bearbeitungsaufgaben definierte Bearbeitungsbereiche festgelegt und die Messpunkte 3 entsprechend positioniert. Die Positionen werden mittels der Sensoreinheit 2 eingelesen, die Daten verarbeitet, gespeichert und für die automatische Steuerung der Arbeitsmaschine 8 zur Verfügung gestellt.

In Fig. 2 sind verschiedene Bearbeitungsbereiche bei der Gleisinstandsetzung in einem Gleisabschnitt mit einer Weiche, die auf einen Gleiswechsel nach links (abbiegende Fahrtstrecke S) eingestellt ist, dargestellt. Dabei sind als Bearbeitungsbereiche B und C die Messpunktpositionen 0L bis 1 L, 1 L bis 2L und 2L bis 3L an der linken Schiene 1 zu detektieren, während an der rechten Schiene 1 die Abschnitte 0R bis 1 R, 1 R bis 2R und 3R bis 4R Bearbeitungsbereiche sind und der Abschnitt 2R bis 3R ein Bereich A ohne Bearbeitung ist.

Die einzelnen Bearbeitungsbereiche des dargestellten Gleisabschnitts können dabei wie folgt spezifiziert sein in:
A - Bereich ohne Bearbeitung (nur Durchfahrt)
B - Bereich mit teilweiser Bearbeitung (Weichenabschnitt)
C - Bereich mit durchgängiger Bearbeitung der Schienenoberfläche (Schleifen eines vollständigen Streckenabschnittes.

In Fig. 3 ist durch die Weiche die Fahrtstrecke bei Geradeausfahrt T (kein Gleiswechsel) eingestellt. Dabei ergeben sich die Bereiche 0L bis 1 L, 1 L bis 2L sowie 3L bis 4L als aktive Bearbeitungsbereiche B und C. Auf der rechten Schiene 1 soll im Bereich der Weiche im Abschnitt L1 bis L2 der Kopf der Schiene 1 nur teilweise bearbeitet werden (Bereich B), während die Bearbeitung zwischen 2L und 3L ausgesetzt wird (passiver Bearbeitungsbereich), d. h. die Schleifkörper (nicht gezeichnet) der Arbeitsmaschine 8 befinden sich in einem Sicherheitsabstand zur Schiene 1, damit die Weiche nicht beschädigt wird. In Messpunktposition 3L setzt die Bearbeitung wieder ein und erfolgt bis zur Position 4L. Auf der rechten Schiene 1 wird in den Abschnitten von 0R bis 1 R sowie 2R bis 3R der Schienenkopf vollständig bearbeitet, während er zwischen den Messpositionen 1 R und 2R nur teilweise bearbeitet wird.

Diese Arbeitsweise kann für jede Schiene 1 beliebig oft wiederholt werden, wobei es keine Rolle spielt, ob der Bereich vorwärts oder rückwärts von der Arbeitsmaschine 8 mit der Sensoreinheit 2 durchfahren wird, da die Messpunkte 3 eine eineindeutige Positions- und Bereichszuordnung garantieren.

Dieses Verfahren der punktgenauen Steuerung der Arbeitsmaschine 8 kann in jedem beliebigen Gleisabschnitt angewendet werden, insbesondere auch innerhalb von Weichen. Hierbei werden Gefahrenstellen, die also nicht beschädigt werden dürfen, markiert und durch die exakte Positionserkennung mittels der Sensoreinheit 2 erfolgt eine fehlerfreie Bearbeitung der Schiene 1. Die exakte und unverwechselbare Erfassung der Messpunkte 3 lässt dabei auch die Bearbeitung mehrerer aufeinander folgender Weichen beliebiger Form zu.

Fig. 4 zeigt in einer Seitenansicht der Arbeitsmaschine 8, dass die Sensoreinheit 2 im Front- bzw. Heckbereich der Arbeitsmaschine 8 angebracht ist. Eine entsprechend um 90° versetzte Ansicht eines Front-/Heckbereichs der Arbeitsmaschine 8 in Fig. 5 lässt erkennen, dass bei außen am Gleis angebrachten Messpunkten 3 die Detektoreinheiten I und II (optischer Sensor I und Funkwellen-Transducer II) vorteilhaft als schwenkbare Sensoreinheit 21 ausgeführt sind, um diese außerhalb der Mess- und Bearbeitungsregimes der Arbeitsmaschine 8 vorzugsweise in einer Gehäusenische (nicht gezeichnet) geschützt zu verwahren, z. B. wenn die Arbeitsmaschine 8 von einer Baustelle zur nächsten gefahren wird.

Außerdem zeigt Fig. 5 eine andere bevorzugte Ausführungsform der Messpunkte 3, bei der außen am Steg der Schiene 1 T-förmige Winkelelemente 43 angesetzt sind. Dabei können die am Steg angesetzten kurzen Schenkel 41 auch durch den Dauermagneten 7 gebildet werden, indem der lange Schenkel 42 direkt auf den Dauermagneten 7 auf geklebt ist.

In den Fig. 6 und 7 ist eine bevorzugte Gestaltung der Erfindung dargestellt, bei der die Detektoreinheiten I und II als transversal zur Gleisrichtung verschiebbare Sensoreinheit 22 ausgeführt sind. Dabei stellt Fig. 6 die entlang einer Traverse 9 ausgefahrene Stellung der verschiebbaren Sensoreinheit 22 für die Erfassung außerhalb der Schienen 1 angebrachter Messpunkte 3 dar, während Fig. 7 die eingefahrene Stellung für innen an einer Rillenschiene 11 befestigte Messpunkte 3 zeigt. Bei letzterer Befestigung wird die Leitschiene (check rail) zur Anbringung des Messpunktes 3 mittels des Magneten 7 (hier zur Vereinfachung nicht gezeichnet) genutzt.

Eine gleichartige Situation ist in Fig. 8 dargestellt, wobei hier ein Gleisabschnitt in eingedeckter Bauweise die Anbringung der Messpunkte 3 an der Leitschiene (check rail) der Rillenschiene 11 zwingend erfordert, da andere Befestigungsmöglichkeiten nicht zur Verfügung stehen. Wegen der dort oft vorherrschenden engen Platzverhältnisse neben der Rillenschiene 11, ist mitunter eine Anpassung der Form des Messpunktes 3 erforderlich.

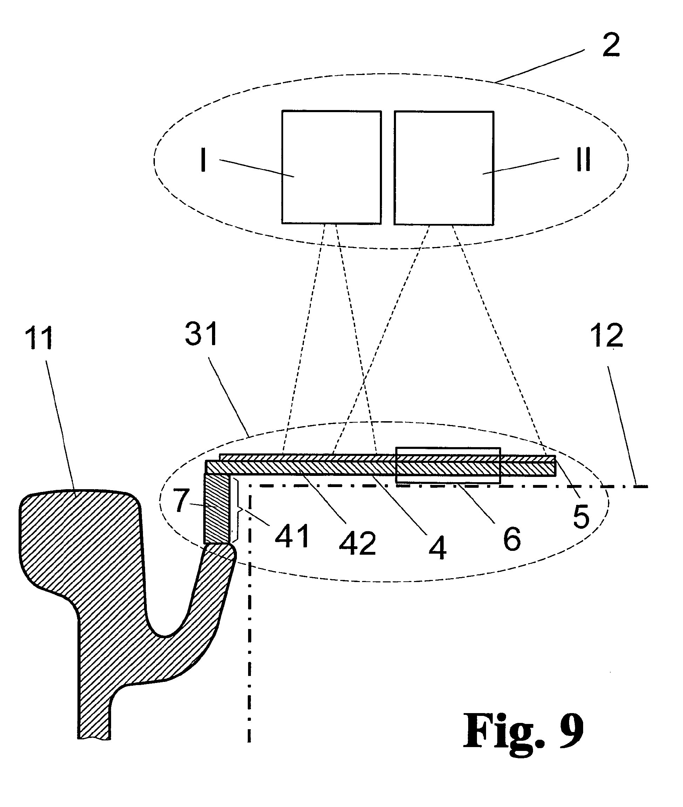

Eine solche Modifikation des Messpunktes 3 ist in der vergrößerten Darstellung von Fig. 9 gezeigt. Hier ist der Messpunkt 3 so abgeändert, dass er vorzugsweise unmittelbar auf dem Straßenverbau (eingedeckter Bereich 12) aufliegt und über den Dauermagneten 7 an der Leitschiene der Rillenschiene 11 kraftschlüssig fixiert wird.

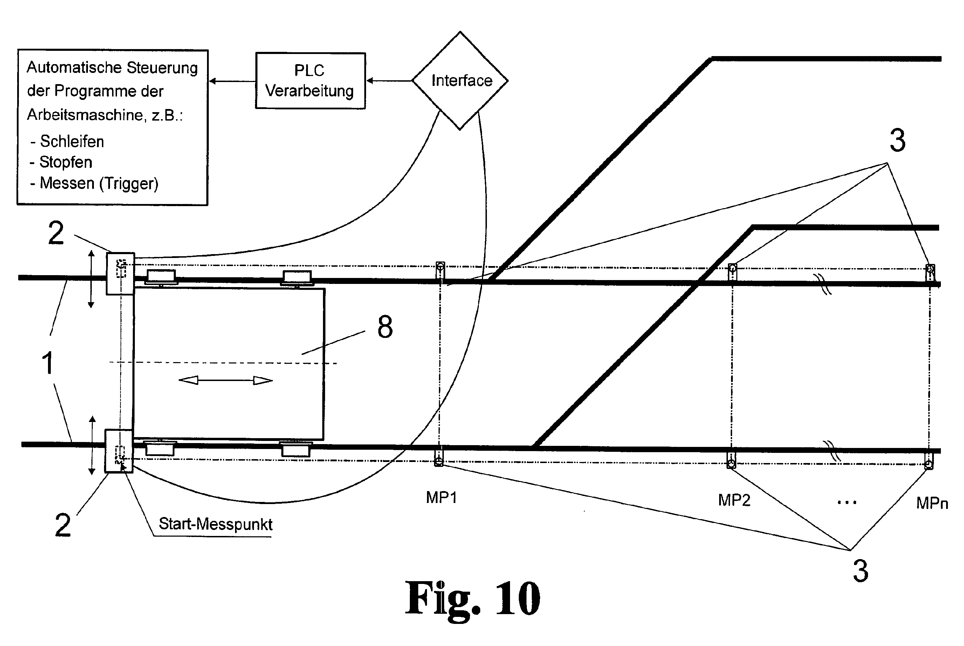

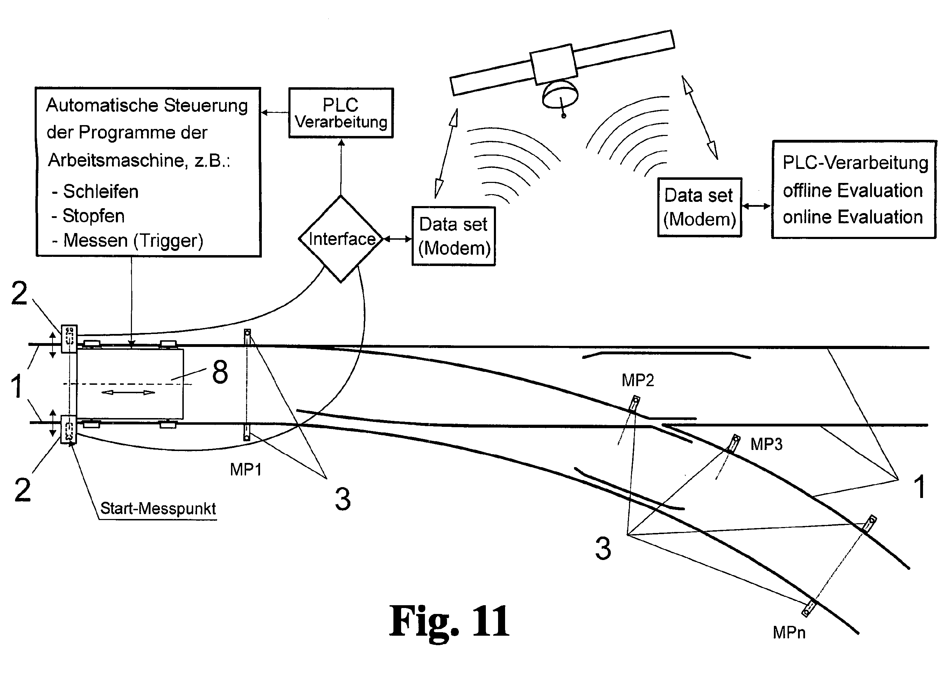

Die Fig. 10 und 11 zeigen eine schematische Darstellung der Wirkungsweise der Detektion der Messpunkte 3 als Schema des Datentransfers für die direkte Steuerung der Arbeitsmaschine 8 und für die Einbindung der erfassten Daten unter Nutzung eines GPS. Die von den Messpunkten 3 mittels der Sensoreinheiten 2 erfassten Signale werden über ein Interface in geeigneter Weise zu einer Computereinheit (PLC) geschickt und dort weiter aufbereitet, um direkt in der Arbeitsmaschine 8 konkrete Bearbeitungsschritte auszuführen. In Fig. 11 ist bei gleicher Messdatenerfassung nach dem PLC ein Modem angeschlossen, um via Satellit die Daten (Koordinaten der Messpunkte 3 und Messwerte) an anderen Orten weltweit (in geeigneter Weise über das Internet auf einer Gegenstelle mit den entsprechenden Zugangsdaten) abrufbar bereitzustellen.

### Bezugszeichenliste

- 1: Schiene (stilisierte Vignolschiene)
- 11: Rillenschiene
- 12: eingedeckter Bereich
- 2: Sensoreinheit
- 21: schwenkbare Sensoreinheit
- 22: verschiebbare Sensoreinheit
- I: optischer Sensor
- II: Funkwellen-Transducer
- 3: Messpunkt
- 31: Messpunkt für eingedeckten Bereich
- 4: Winkelelement
- 41: kurzer Schenkel
- 42: langer Schenkel
- 43: T-förmiges Winkelelement
- 5: Lumineszenzschicht
- 6: RFID-Chip
- 7: Dauermagnet
- 8: Arbeitsmaschine
- 9: Traverse (zum Verschieben der Sensoreinheit)
- A: Bereich ohne Bearbeitung
- B: Bereich mit teilweiser Bearbeitung (des Schienenkopfes)
- C: Bereich mit durchgängiger Bearbeitung (des Schienenkopfes)
- S: Fahrtstrecke beim Abbiegen
- T: Fahrtstrecke bei Geradeausfahrt
- u, v, w: Fahrtrichtung

## Patentansprüche

1. Anordnung zur Markierung und Erfassung der Markierung für die zuverlässige und positionsgenaue Bestimmung von Gleisabschnitten zum Zweck der Instandhaltung von Schienen (1), bei der Mittel zur optischen Erfassung von Messpunkten vorhanden sind, **dadurch gekennzeichnet, dass**
- eine Sensoreinheit (2) zur Erfassung von neben einer Schiene (1) befindlichen Messpunkten (3) mindestens zwei unabhängige kontaktlos messende Detektoreinheiten (I, II) auf Basis unterschiedlicher Messprinzipen aufweist,
• wobei die Sensoreinheit (2) für ein erstes Messprinzip einen optischen Sensor (I) mit spektral-selektiver Empfindlichkeit und
• für ein zweites Messprinzip einen Identifikations-Detektor (II) zur individuellen Identifikation von Messpunkten (3) beinhaltet,
- die Messpunkte (3) als Winkelelemente (4) mit mindestens zwei Schenkeln (41, 42) ausgebildet sind, wobei ein erster vertikal ausgerichteter Schenkel (41) an der Schiene (1) lösbar befestigt ist und ein zweiter horizontal ausgerichteter Schenkel (42) mit einer spektral schmalbandig emittierenden Beschichtung (5) für den spektral-selektiven Sensor (I) sowie einem Identifikationskennungsträger (6) für den Identifikations-Detektor (II) versehen ist und
- die Sensoreinheit (2) an einem gleisverfahrbaren Gerät (8) so einstellbar angebracht ist, dass die schmalbandig emittierende Beschichtung (5) und der Identifikationskennungsträger (6) auf dem zweiten horizontalen Schenkel (41) jedes Winkelelements (4) gleichzeitig detektierbar sind, wenn die unabhängigen Detektoreinheiten (I, II) der Sensoreinheit (2) gleichsinnig mit der Bewegung des gleisverfahrbaren Geräts (8) parallel zur Schiene (1) über einem der als Messpunkte (3) an der Schiene (1) angebrachten Winkelelemente (4) positioniert sind.

2. Anordnung nach Anspruch 1, **dadurch gekennzeichnet, dass** die Sensoreinheit (2) als zur Schiene (1) transversal vertikal schwenkbare Sensoreinheit (21) ausgebildet ist.

3. Anordnung nach Anspruch 1, **dadurch gekennzeichnet, dass** die Sensoreinheit (2) zur Schiene (1) transversal verschiebbar angebracht ist, um sie an Schienenspurbreite und Ausrichtung der Messpunkte (3) zur Schiene (1) anzupassen.

4. Anordnung nach Anspruch 1, **dadurch gekennzeichnet, dass** für jede Schiene (1) eine Sensoreinheit (2) am gleisverfahrbaren Gerät (8) vorhanden ist, wobei die Sensoreinheiten (2) in Transversalrichtung zum Gleis gegenüberliegend angeordnet sind.

5. Anordnung nach Anspruch 1, **dadurch gekennzeichnet, dass** die Messpunkte (3) an der Schiene (1) mittels eines Dauermagneten (7) lösbar befestigt sind.

6. Anordnung nach Anspruch 5, **dadurch gekennzeichnet, dass** die Messpunkte (3) am Steg der Schiene (1) angebracht sind.

7. Anordnung nach Anspruch 5, **dadurch gekennzeichnet, dass** die Messpunkte (3) an der Leitschiene einer Rillenschiene (11) angebracht sind.

8. Anordnung nach Anspruch 5, **dadurch gekennzeichnet, dass** die Messpunkte (3) an einer Führungsschiene des Gleises angebracht sind.

9. Anordnung nach Anspruch 1, **dadurch gekennzeichnet, dass** die Messpunkte (3) mit einer Lumineszenzschicht (5) als schmalbandig emittierender Beschichtung versehen sind.

10. Anordnung nach Anspruch 9, **dadurch gekennzeichnet, dass** die Sensoreinheit (2) einen spektral-selektiven Sensor (I) für Lumineszenzlicht enthält, der an die Emissionswellenlängenbereich der Lumineszenzschicht (5) angepasst ist.

11. Anordnung nach Anspruch 1 **dadurch gekennzeichnet, dass** die Messpunkte (3) mit einem RFID-Chip (6) als Identifikationskennungsträger versehen sind.

12. Anordnung nach Anspruch 1 1, **dadurch gekennzeichnet, dass** die Sensoreinheit (2) einen Funkwellen-Transducer (II) zur Auslesung des RFID-Chips (6) enthält.

13. Anordnung nach Anspruch 1, **dadurch gekennzeichnet, dass** das gleisverfahrbare Gerät zur Befestigung der Sensoreinheit (2) eine Arbeitsmaschine (8) aus der Gruppe der Schienenschleifmaschinen oder Schienenstopfmaschinen ist.

14. Anordnung nach Anspruch 1 3, **dadurch gekennzeichnet, dass** das gleisverfahrbare Gerät ein Messfahrzeug ist.

## Claims

1. Arrangement for marking and detecting the marking for determining track sections reliably and accurately with respect to position for the purpose of maintaining rails (1), wherein means are provided for optical detection of measuring points, **characterized in that**
- a sensor unit (2) for detecting measuring points (3) located next to a rail (1) has at least two independent detector units (I, II) measuring in a non-contacting manner based on different measurement principles,
• wherein for a first measurement principle the sensor unit (2) includes an optical sensor (I) having spectrally selective sensitivity, and
• for a second measurement principle the sensor unit (2) includes an identification detector (II) for individual identification of measuring points (3),
- the measuring points (3) are constructed as angle elements (4) having at least two legs (41, 42), wherein a first, vertically oriented leg (41) is detachably fastened to the rail (1), and a second, horizontally oriented leg (42) is provided with a coating (5) emitting in a narrow spectral band for the spectrally selective sensor (I) and with an identification value carrier (6) for the identification detector (II), and
- the sensor unit (2) is adjustably arranged at a device (8) which can travel on tracks in such a way that the coating (5) emitting in a narrow band and the identification value carrier (6) on the second, horizontal leg (42) of each angle element (4) are detectable simultaneously, when the independent detector units (I, II) of the sensor unit (2) are positioned in the same direction with the movement of the device (8) which can travel on tracks parallel to the rail (1) over one of the angle elements (4) fastened to the rail (1) as measuring points (3).

2. Arrangement according to claim 1, **characterized in that** the sensor unit (2) is constructed as sensor unit (21) which is swivelable vertically transverse to the rail (1).

3. Arrangement according to claim 1, **characterized in that** the sensor unit (2) is arranged so as to be displaceable transverse to the rail (1) in order to adapt it to rail gauge and orientation of the measuring points (3) with respect to the rail (1).

4. Arrangement according to claim 1, **characterized in that** a sensor unit (2) for each rail (1) is provided at the device (8) which can travel on tracks, wherein the sensor units (2) are arranged opposite one another in transverse direction with respect to the track.

5. Arrangement according to claim 1, **characterized in that** the measuring points (3) are detachably fastened to the rail (1) by means of a permanent magnet (7).

6. Arrangement according to claim 5, **characterized in that** the measuring points (3) are arranged at the web of the rail (1).

7. Arrangement according to claim 5, **characterized in that** the measuring points (3) are arranged at the guard rail of a grooved rail (11).

8. Arrangement according to claim 5, **characterized in that** the measuring points (3) are arranged at a guide rail of the track.

9. Arrangement according to claim 1, **characterized in that** the measuring points (3) are provided with a luminescent layer (5) as a coating which emits in a narrow band.

10. Arrangement according to claim 9, **characterized in that** the sensor unit (2) comprises a spectrally selective sensor (I) for luminescent light which is adapted to the emission wavelength range of the luminescent layer (5).

11. Arrangement according to claim 1, **characterized in that** the measuring points (3) are provided with an RFID chip (6) as an identification value carrier.

12. Arrangement according to claim 11, **characterized in that** the sensor unit (2) comprises a radio wave transducer (II) for reading the RFID chip (6).

13. Arrangement according to claim 1, **characterized in that** the device which can travel on tracks for fastening of the sensor unit (2) is a work machine (8) from the group comprising rail grinding machines or rail tamping machines.

14. Arrangement according to claim 13, **characterized in that** the device which can travel on tracks is a measuring vehicle.

## Revendications

1. Ensemble permettant de marquer et détecter le marquage pour déterminer des sections de voie de manière fiable et précise à ce qui concerne la position à des fins d'entretien de rails (1), dans lequel existent des moyens de détection optique de points de mesure, **caractérisé en ce que**
- une unité de capteur (2) pour détecter des points de mesure (3) qui se trouvent à côté d'un rail (1) a au moins deux unités de détecteur (I, II) indépendantes mesurant sans contact sur la base de différents principes de mesure,
• l'unité de capteur (2) comprenant un capteur optique (I) ayant une sensibilité à sélectivité spectrale pour un premier principe de mesure, et
• l'unité de capteur (2) comprenant un détecteur d'identification (II) pour l'identification individuelle de points de mesure (3) pour un deuxième principe de mesure,
- les points de mesure (3) sont construits comme éléments d'angle (4) ayant au moins deux jambes (41, 42), dans lesquelles une première jambe (41) orientée verticalement est fixée de manière amovible au rail (1), et une deuxième jambe (42) orientée horizontalement est pourvue d'un revêtement (5) émettant à bande spectrale étroite pour le capteur (I) à sélectivité spectrale et d'un support de valeur d'identification (6) pour le détecteur d'identification (II),
- et l'unité de capteur (2) est disposée de façon ajustable à un dispositif (8) qui peut se déplacer sur des voies de telle manière que le revêtement (5) émettant à bande étroite et le support de valeur d'identification (6) à la deuxième jambe (42) horizontale de chaque élément d'angle (4) sont détectables simultanément, quand les unités de détecteur (I, II) indépendantes de l'unité de capteur (2) sont positionnées dans la même direction que le mouvement du dispositif (8) qui peut se déplacer sur des voies parallèlement au rail (1) sur un des éléments d'angle (4) fixés au rail (1) comme points de mesure (3).

2. Ensemble selon la revendication 1, **caractérisé en ce que** l'unité de capteur (2) est construite comme unité de capteur (21) pouvant pivoter verticalement transversalement au rail (1).

3. Ensemble selon la revendication 1, **caractérisé en ce que** l'unité de capteur (2) est disposée de façon à pouvoir être déplacée transversalement au rail (1) pour l'adapter à l'écartement de rail et à l'orientation des points de mesure (3) par rapport au rail (1).

4. Ensemble selon la revendication 1, **caractérisé en ce qu'**une unité de capteur (2) pour chaque rail (1) est prévue au dispositif (8) qui peut se déplacer sur des voies, les unités de capteur (2) étant disposées de manière opposée les unes par rapport aux autres en direction transversale par rapport à la voie.

5. Ensemble selon la revendication 1, **caractérisé en ce que** les points de mesure (3) sont fixés de manière amovible au rail (1) au moyen d'un aimant permanent (7).

6. Ensemble selon la revendication 5, **caractérisé en ce que** les points de mesure (3) sont disposés à l'âme du rail (1).

7. Ensemble selon la revendication 5, **caractérisé en ce que** les points de mesure (3) sont disposés au rail de glissière d'un rail à gorge (11).

8. Ensemble selon la revendication 5, **caractérisé en ce que** les points de mesure (3) sont disposés à un rail de guidage de la voie.

9. Ensemble selon la revendication 1, **caractérisé en ce que** les points de mesure (3) sont pourvus d'une couche luminescente (5) comme revêtement émettant à bande étroite.

10. Ensemble selon la revendication 9, **caractérisé en ce que** l'unité de capteur (2) comprend un capteur (I) à sélectivité spectrale pour la lumière luminescente qui est adaptée à la plage de longueurs d'ondes d'émission de la couche luminescente (5).

11. Ensemble selon la revendication 1, **caractérisé en ce que** les points de mesure (3) sont pourvus d'une puce RFID (6) comme support de valeur d'identification.

12. Ensemble selon la revendication 11, **caractérisé en ce que** l'unité de capteur (2) comprend un transducteur d'ondes radio (II) pour lire la puce RFID (6).

13. Ensemble selon la revendication 1, **caractérisé en ce que** pour fixer l'unité de capteur (2) le dispositif (8) qui peut se déplacer sur des voies est une machine de travail (8) du groupe comprenant des machines à meuler des rails ou machines à bourrer des rails.

14. Ensemble selon la revendication 13, **caractérisé en ce que** le dispositif (8) qui peut se déplacer sur des voies est un véhicule de mesure.
